# EUROPÄISCHE PATENTSCHRIFT

(11) **EP 1 031 265 B1**
(45) Veröffentlichungstag und Bekanntmachung des Hinweises auf die Patenterteilung: **09.01.2002**
(21) Anmeldenummer: 00101545.2
(22) Anmeldetag: 27.01.2000
(51) Int. Cl.: A01C 7/00, A01C 7/20

(54) **Aufhängung eines Reihenräumers**
Device for supporting a reamer
Appareil pour le soutien d'un racleur

(30) Priorität: 24.02.1999 DE 19907788
(43) Veröffentlichungstag der Anmeldung: 30.08.2000
(73) Patentinhaber: DEERE & COMPANY, Moline, Illinois 61265-8098 (US)
(72) Erfinder: Stephens, Lyle Eugene, Hampton, IL 61256 (US); Janelle, Luc, Colona, IL 61241 (US); Wendling, Ignatz, Bettendorf, IL 52722 (US); Jüptner, Detlef, 66271 Kleinblittersdorf (DE)
(74) Vertreter: Holst, Sönke, Dr.

(56) Entgegenhaltungen:
- EP-A- 0 764 397
- AU-B- 567 228
- US-A- 3 797 418
- US-A- 4 580 507
- US-A- 4 834 189

## Beschreibung

Die Erfindung betrifft eine Aufhängung eines Reihenräumers mit einem zwei Lenker aufweisenden Parallelogrammgestänge und einer Spannvorrichtung zwischen den beiden Lenkern.

Die US-A-5,341,754 offenbart ein Sägerät mit mehreren Sä- oder Pflanzeinheiten, denen jeweils ein Reihenräumer vorgeschaltet ist, damit auf dem Boden liegendes Material wie Stroh, Unkraut, Spindeln, etc. aus dem Weg der Reihe und somit der nachfolgend zu ziehenden Furche geräumt werden kann. Jeder Reihenräumer weist zwei konvergierende Scheiben auf, die mittels eines Parallelogrammgestänges vertikal schwenkbar an einem Rahmen angreifen. Zwischen den sich gegenüberliegenden Eckpunkten zweier Lenker des Parallelogrammgestänges erstreckt sich eine Zugfeder, die stets danach strebt, die Räder auf den Boden zu drücken.

Das der Erfindung zugrunde liegende Problem wird darin gesehen, daß die Räder stets auf dem Boden abrollen und sich selbst dann in geringem Abstand dazu befinden, wenn der Rahmen, an dem sich die Reihenräumer und die Sä- oder Pflanzeinheiten befinden, angehoben wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann der Reihenräumer z. B. fernbetätigbar in verschiedene Stellungen gebracht und somit insbesondere in eine Außerbetriebsstellung angehoben werden, in der die Räumscheibe weder mit dem Ackerboden noch mit einer evtl. Straßenoberfläche in Berührung kommt. Die Verstellung gestaltet sich deshalb einfach, weil sich ein Parallelogramm öffnen und schließen läßt, ohne daß der Stellmotor an einem davon getrennten Lager angreift. Die Spannvorrichtung kann in einfachster Form als eine Druck- oder Zugfeder, als ein Gewicht, als ein Gasdruckspeicher oder dergleichen ausgebildet sein. Hierzu kann der Stellmotor einfach oder doppeltwirkend ausgebildet werden.

Wenn zwischen einem Lenker und dem Stellmotor ein Kraftspeicher vorgesehen ist, der als Gummipuffer, Druck- oder Zugfeder, Gasbehälter oder dergleichen ausgebildet sein kann, wirken sich die Stöße aufgrund der Bodenunebenheiten nicht voll auf den Stellmotor aus.

Eine weitere Milderung der Stöße auf den Stellmotor wird dadurch vermieden, daß der Lenker erst nach Zurücklegen eines bestimmten Weges den Stellmotor beaufschlagt. Innerhalb dieses Weges kann der Lenker von dem Kraftspeicher belastet oder unbelastet bewegt werden. Die Leerwegverbindung kann auf verschiedene Weise, z. B. mittels Schlitzen, Hebeln und Anschlägen und dergl. ausgebildet werden.

Der Stellmotor kann einfachwirkend ausgebildet werden, wenn er in eine Richtung mittels Druckmittel und in die andere Richtung mittels der Spannvorrichtung bewegt wird.

Zwar könnte die Spannvorrichtung auch an den Lenkern selbst oder auch nur an einem Lenker angreifen. Herstellungstechnisch ist es von großem Vorteil, wenn die Spannvorrichtung oder ein in ihr enthaltenes Spannelement mit dem Stellmotor als Einheit hergestellt und angeboten wird, wobei die Spannvorrichtung/das Spannelement auch außerhalb des Gehäuses angebaut sein kann. Zur Vermeidung von Verschmutzung und Beschädigung ist es ferner hilfreich, wenn das Spannelement, z. B. in der Art einer Druckfeder im Innenraum des Gehäuses vorgesehen ist.

Eine einfache Lösung einer Leerwegverbindung besteht in der Verwendung eines Schlitzes und eines darin beweglichen Bolzens. Der Schlitz kann sowohl in eine Platte eingearbeitet sein als sich auch innerhalb einer von einem Rund- oder Flachstahl gebildeten Führung ergeben.

Vibrationen und Verschleiß werden vermieden, wenn sich der Bolzen nicht lose in dem Schlitz bewegen kann, sondern wenn er von dem Kraftspeicher beaufschlagt wird. Auf diese Weise liegt der Reihenräumer auch stets mit einem gewissen Druck auf dem Boden auf.

Wenn eine Druckmittelzu- oder -abfuhr zu oder aus dem Stellmotor sperrbar ist und somit eine Bewegungssperre für den Reihenräumer eingerichtet werden kann, ist es möglich, den Reihenräumer in einer Außerbetriebsstellung festzulegen, was für den Transport auf der Straße oder bei der Arbeit auf Boden sinnvoll ist, auf dem die Furche nicht zu räumen ist.

Eine Abhängigkeit der Bewegungen des Reihenräumers und eines Furchenöffners, Säschars oder dergl. stellt sicher, daß die Reihenräumer nicht separat verstellt werden müssen und daß der bzw. die Reihenräumer nicht in einer abgesenkten Stellung verharren, während der Furchenöffner oder dergl. bereits angehoben ist.

Die Kraft, mit der der Reihenräumer auf dem Boden liegendes Gut bearbeitet, trennt oder wegräumt, kann dadurch eingestellt und an die gegebenen Verhältnisse angepaßt werden, daß ein an dem Stellmotor anstehender Betriebsdruck einstellbar ist. Hierzu kann ein Druckbegrenzungsventil, ein Druckspeicher, eine Drossel oder dergleichen verwendet werden.

In der Zeichnung ist ein nachfolgend näher beschriebenes Ausführungsbeispiel der Erfindung dargestellt. Es zeigt:

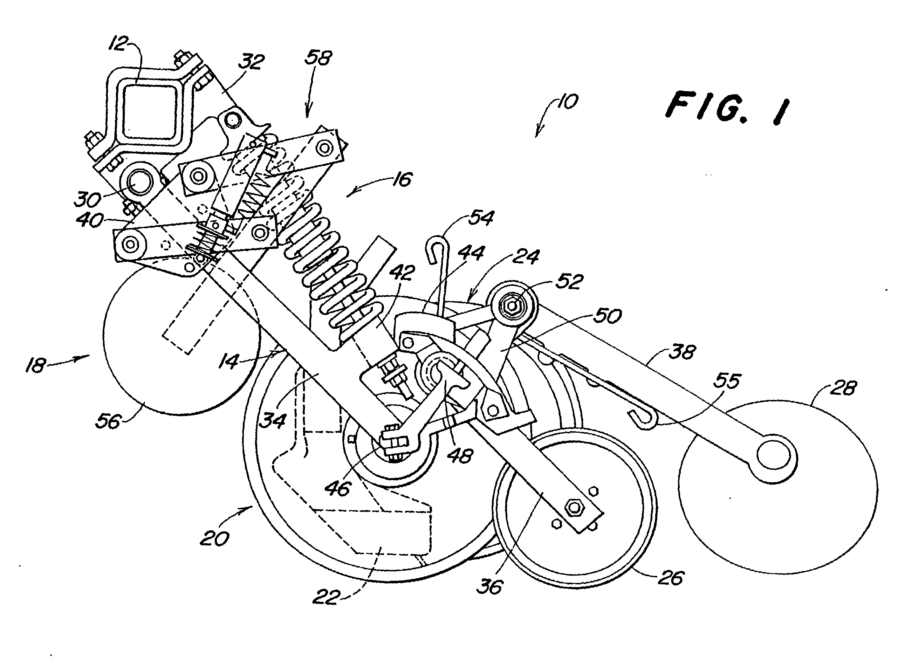

- Fig. 1: eine Säeinheit mit einem Reihenräumer in Seitenansicht,
- Fig. 2: den Reihenräumer in angehobener Stellung in Seitenansicht und in schematischer Darstellung,
- Fig. 3: den Reihenräumer in abgesenkter Stellung in Seitenansicht und in schematischer Darstellung und
- Fig. 4: einen Hydraulikkreislauf zur Bedienung des Reihenräumers.

Eine Säeinheit 10 einer in ihrer Gesamtheit nicht dargestellten Sämaschine, die insbesondere in der No-Till-Technologie ausgeführt ist, ist an einem Querträger 12 befestigt und setzt sich unter anderem aus einem Tragarm 14, einer Andrückvorrichtung 16, einem Reihenräumer 18, einem Furchenöffner 20, einem Säschar 22, einem Höheneinstellrad 24, einem Andrückrad 26 und einem Zustreichrad 28 zusammen.

Die Säeinheit 10 ist in der Regel eine unter mehreren an der Sämaschine und dient dazu, Saatgut in den Boden einzubringen. Hierzu wird sie von einem nicht gezeigten Ackerschlepper über ein Feld gezogen. Im Falle einer sogenannten No-Till-Sämaschine ist der Boden unbearbeitet, d. h. Ernterückstände, Stoppeln und dergleichen sind nicht in den Boden eingearbeitet sondern befinden sich auf seiner Oberfläche.

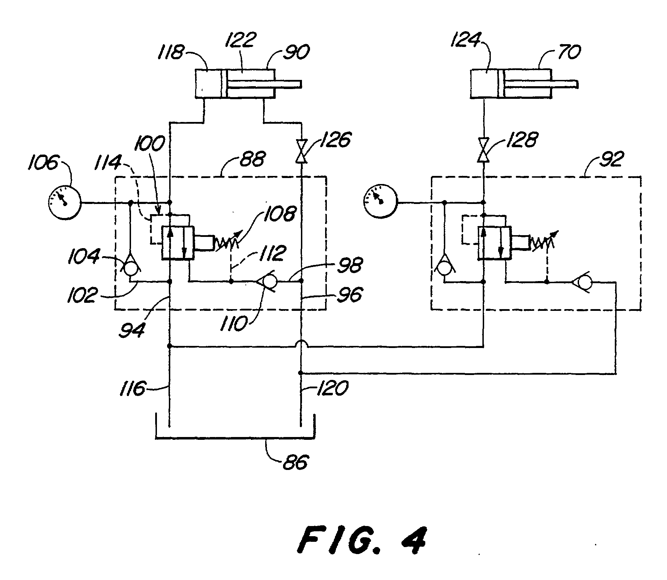

Die oder mehrere Säeinheiten 10 werden auf dem Querträger 12 befestigt, der sich quer zur Bewegungsrichtung der Sämaschine erstreckt und entweder an den Ackerschlepper angehängt, von diesem gezogen oder getragen wird. In aller Regel handelt es sich um ein biegesteifes Vierkantrohr. Mittels nicht gezeigter Hub- oder Schwenkvorrichtungen können der Querträger 12 und mit ihm auch die Säeinheit(en) 12 in bezug auf den Boden angehoben oder abgesenkt werden. Hierzu dient ein in Figur 4 dargestellter Stellmotor 90.

Der Tragarm 14 ist in einem Lager 30 vertikal schwenkbar an den Querträger 12 bzw. einen diesen umgebenden Halter 32 angeschlossen und setzt sich aus einem vorderen Abschnitt 34, einem mittleren Abschnitt 36 und einem rückwärtigen Abschnitt 38 zusammen. Der vordere und der mittlere Abschnitt 34 und 36 und der mittlere und der rückwärtige Abschnitt 36 und 38 sind in nicht näher bezeichneten Lagern jeweils vertikal schwenkbar miteinander verbunden und können sich somit evtl. Bodenunebenheiten anpassen.

Der vordere Abschnitt 34 greift mit seinem vorderen Endbereich an dem Lager 30 an und trägt unmittelbar dahinter eine Konsole 40 zur Aufnahme des Reihenräumers 18. Unmittelbar oberhalb seines rückwärtigen Endbereichs ist ein Aufnehmer 42 für die Andrückvorrichtung 16 und ein Anschluß 44 für den mittleren Abschnitt 36 vorgesehen. In seinem rückwärtigen Endbereich ist ein Lager 46 für den Furchenöffner 20 vorgesehen.

Der mittlere Abschnitt 36 greift einenends in einem Lager 48 an dem Anschluß 44 vertikal schwenkbar an und trägt anderenends drehbar das Andrückrad 26. Unmittelbar vor dem Lager 48 erstreckt sich von dem mittleren Abschnitt 36 ein Abzweig 50 fort, der in einem Lager 52 ausläuft.

Der rückwärtige Abschnitt 38 greift einenends - vorne - in dem Lager 52 vertikal schwenkbar an und hält anderenends drehbar das Zustreichrad 28.

Zwischen dem Querträger 12 und dem vorderen Abschnitt 34 wirkt die Andrückvorrichtung 16, zwischen dem vorderen und dem mittleren Abschnitt eine Feder 54 und zwischen dem mittleren und dem rückwärtigen Abschnitt eine Feder 55 und zwar jeweils in Richtung auf den Boden.

Die Andrückvorrichtung 16 ist als eine Spiraldruckfeder mit einem Wegbegrenzer ausgebildet, die nicht näher bezeichnet werden und in bekannter Weise vorne an dem Halter 32 und hinten an dem Aufnehmer 42 angreifen.

Der Reihenräumer 18 enthält eine Räumscheibe 56 und eine Aufhängung 58.

Die Räumscheibe 56 ist stilisiert als eine runde Scheibe dargestellt, enthält jedoch tatsächlich einen gewellten oder gezackten Randbereich in der Art eines Brotmessers oder eines Ketten- oder Zahnrads, wie dies an sich bekannt ist. Es ist die Aufgabe der Räumscheibe 56 auf dem Boden liegende Ernterückstände oder sonstige Gegenstände aus dem Weg des Furchenöffners 20 zu räumen, damit dieser eine einwandfreie Furche bilden kann und kein verrottendes Gut in die Furche gelangt, das den Keimprozeß des Saatguts beeinflussen könnte. Unter bestimmten Umständen, z. B. beim Transport der Säeinheit 10 oder bei losem Boden soll die Räumscheibe 56 nicht in Eingriff mit dem Boden gelangen können, um eine Furchenbildung vor der Säeinheit 10 zu vermeiden.

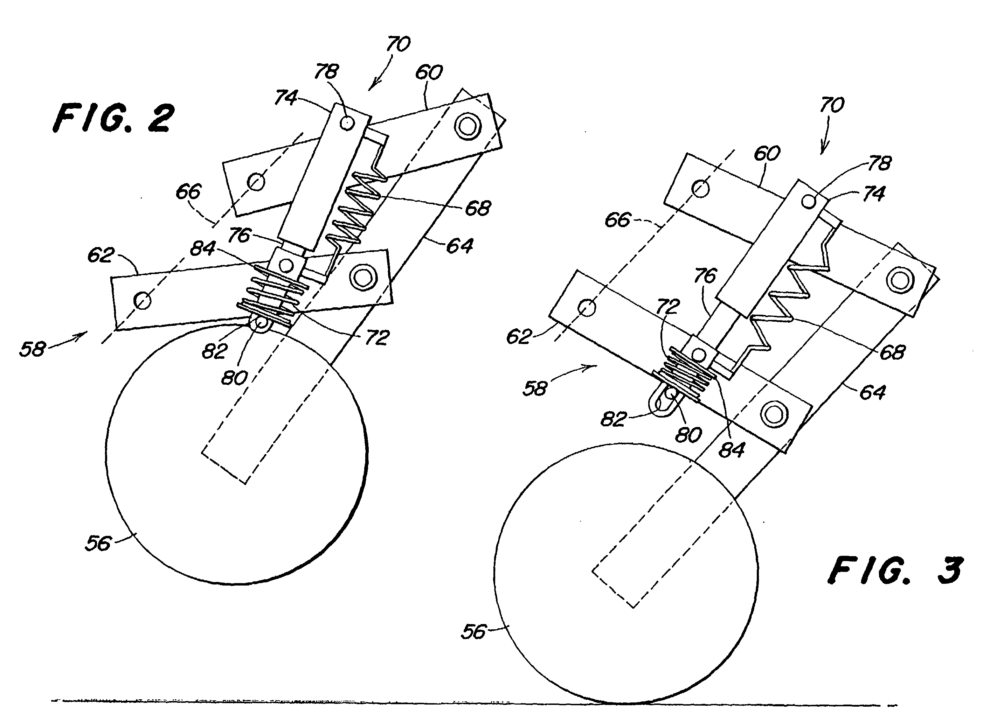

Die Aufhängung 58 stellt eine vertikal verlagerbare Verbindung zwischen der Räumscheibe 56 und dem Halter 32 dar und enthält - siehe Figuren 2 und 3 - in der Art eines Parallelogrammgestänges ausgebildete und angeordnete obere, untere, rückwärtige und vordere Lenker 60, 62, 64, 66, eine Spannvorrichtung 68, einen Stellmotor 70 und einen Kraftspeicher 72.

Der obere und der untere Lenker 60, 62 sind identisch oder im wesentlichen identisch ausgebildet und greifen leicht zueinander divergierend mit ihrem vorderen Endbereich an dem vorderen Lenker 66 und mit ihrem rückwärtigen Endbereich an dem rückwärtigen Lenker 64 jeweils schwenkbar an.

Der rückwärtige Lenker 64 erstreckt sich über den unteren Lenker 62 hinaus und nimmt in seinem Endbereich die Räumscheibe 56 drehbar auf.

Der vordere Lenker 66 wird von der Konsole 40 gebildet und ist im wesentlichen ortsfest.

In der jeweiligen Verbindung der einzelnen Lenker 60, 62, 64, 66 sind jeweils nicht näher bezeichnete Lager vorgesehen, die ein vertikale Schwenkmöglicheit der Aufhängung 58 zulassen.

Die Spannvorrichtung 68 ist in diesem Fall als eine Spiralzugfeder ausgebildet und greift mit ihren Endbereichen jeweils an den Endbereichen des Stellmotors 70 an, und zwar derart, daß sie den oberen und den unteren Lenker 60, 62 aufeinander zubewegt.

Der Stellmotor 70 ist in dem vorliegenden Ausführungsbeispiel als ein Hydraulikmotor bzw. als eine Hydraulikzylinder-Kolbeneinheit mit einem Gehäuse 74 und einem als Kolben ausgebildeten Stellglied 76 ausgebildet, die von einem in Figur 4 gezeigten Hydraulikkreislauf bedient werden. Aufgrund der Verbindung des Stellmotors 70 mit der Spannvorrichtung 68 wird der Stellmotor 70 mittels Hydraulikdruck gestreckt und von der Spannvorrichtung 68 verkürzt. Der Stellmotor 70 ist mit dem oberen Endbereich des Gehäuses 74 auf einem Bolzen 78 schwenkbar gelagert, der an dem oberen Lenker 60 befestigt ist. Anderenends ist das Stellglied 76 mit einem Bolzen 80 verbunden, der an den unteren Lenker 62 angeschlossen ist. Wird der Stellmotor 70 ausgefahren, nimmt das Parallelogramm seine gestreckte Stellung und die Spannvorrichtung 68 ihren gestreckten Zustand ein. Wird der Stellmotor 70 drucklos gemacht, zieht die Spannvorrichtung 68 das Parallelogramm in oder zu seine(r) geschlossenen Lage.

Das Stellglied 76 ist in seinem freien Endbereich mit einem Schlitz 82 versehen, in dem der Bolzen 80 in Richtung der Längsachse des Stellmotors 70 geführt ist. An dem dem Stellglied 76 zugelegenen Endbereich des Schlitzes 82 ist ein Anschlag 84 axial unbeweglich vorgesehen, der im vorliegenden Ausführungsbeispiel als eine Scheibe ausgebildet ist, die an einem das Stellglied 76 diametral durchdringenden Stift anliegt.

Zwischen dem Anschlag 84 und dem Bolzen 82 ist der als eine Spiraldruckfeder ausgebildete Kraftspeicher 72 vorzugsweise mit Vorspannung eingesetzt, der somit den Bolzen 82 stets in Anlage an einem Ende des Schlitzes 82 drängt. Der Kraftspeicher 72 kann wenigstens über einen Teil der Länge des Schlitzes 82 zusammengedrückt werden. Aufgrund der Anordnung des Kraftspeichers 72, des Bolzens 80, des Schlitzes 82 und des Anschlags 84 kann sich das Parallelogrammgestänge in einem gewissen Maß bewegen, obwohl der Stellmotor 70 in sich starr bleibt. Der Schlitz 82 und der Anschlag 84 können auch in einem separaten Teil zusammengefaßt, der den Kraftspeicher 72 aufnimmt und auf das Stellglied 76 aufgesetzt und mit diesem verbunden wird. Wunschgemäß kann zwischen dem Bolzen 80 und dem Kraftspeicher 72 eine Scheibe zur besseren Führung des Kraftspeichers 72 vorgesehen werden.

Der Furchenräumer 20 ist als eine im Randbereich glatte aber in sich gewölbte Scheibe ausgebildet, die mit geringer Neigung zur Fahrtrichtung von dem vorderen Abschnitt 34 drehbar aufgenommen ist und der Räumscheibe 56 folgt.

Das Säschar 22 ist in nicht gezeigter aber an sich bekannter Weise mit einem Schlauch oder Rohr an einen nicht gezeigten Saatgutbehälter angeschlossen und legt von diesem empfangenes Saatgut in der Furche ab. Das Säschar 22 befindet sich unterhalb der Mitte des Furchenöffners 20 in dessen Schattenbereich und bewegt sich mit dem Furchenöffner 20 vertikal.

Das Höheneinstellrad 24 ist ebenfalls in vertikaler Richtung mit dem Furchenöffner 20 verbunden und läuft auf dem Randbereich der Furche auf.

Das Andrückrad 26 läuft im Bereich der Furche und befindet sich an dem rückwärtigen Endbereich des mittleren Abschnitts 36. Dem Andrückrad 26 kommt die Aufgabe zu, das neu in die Furche abgelegte Saatgut anzudrücken, damit es gut anwächst.

Das Zustreichrad 28 wird von dem rückwärtigen Abschnitt 38 getragen und nimmt eine geringe Neigung zu der Längsrichtung der Furche ein, so daß Erdreich seitwärts in die Furche gedrückt wird, nachdem das Saatgut abgelegt ist.

In Figur 4 ist ein Hydraulikkreis gezeigt, wie er zur Verstellung der Säeinheiten 10 insgesamt und des/der Reihenräumer(s) 18 im einzelnen verwendet wird.

Der Hydraulikkreis ist an ein bekanntes doppeltwirkendes Steuerventil 86 eines Ackerschleppers angeschlossen und enthält eine Furchenöffnerventileinheit 88 für einen Stellmotor 90 und eine Reihenräumerventileinheit 92 für den Stellmotor 70.

Die Furchenöffnerventileinheit 88 weist einen ersten Durchgang 94 und einen zweiten Durchgang 96 auf, die mittels eines Kanals 98 untereinander verbunden sind.

Der erste Durchgang 94 verläuft durch ein Druckbegrenzungsventil 100 und ist parallel zu einer Brücke 102 geschaltet, die das Druckbegrenzungsventil 100 überbrückt. In der Brücke 102 ist ein Rückschlagventil 104 vorgesehen, das in Richtung von dem Stellmotor 90 zu dem Steuergerät 86 öffnet. An die Brücke 102 ist zwischen dem Rückschlagventil 100 und dem Stellmotor 90 ein Druckanzeigegerät 106 angeschlossen.

Das Druckbegrenzungsventil 100 ist so ausgebildet, daß sein Öffnungsdruck verstellt werden kann, wozu eine Feder 108, deren Anlagekraft verstellbar ist, vorgesehen ist.

Der Kanal 98 durchquert ein Rückschlagventil 110 und das Druckbegrenzungsventil 100. Eine Pilotleitung 112 zweigt von dem Kanal 98 an einer Stelle zwischen dem Rückschlagventil 110 und dem Druckbegrenzungsventil 100 ab und mündet auf der von der Feder 108 beaufschlagten Seite des Druckbegrenzungsventils 100.

Eine weitere Pilotleitung 114 mündet auf der Seite in das Druckbegrenzungsventil 100, die der Feder 108 gegenüberliegt, und hat ihren Ausgangspunkt zwischen der Verbindung der Brücke 102 mit dem ersten Durchgang 94 und dem Druckbegrenzungsventil 100. Das Druckbegrenzungsventil 100 nimmt je nach den anstehenden Drücken und Kräften eine erste Stellung, in der ein Druckmittelzufluß zu dem Stellmotor 90 stattfindet, und eine zweite Stellung, in der eine Verbindung des ersten Durchgangs 94 zu dem Kanal 98 entsteht, ein.

Die Reihenräumerventileinheit 92 ist nahezu identisch zu der Furchenöffnerventileinheit 88 ausgebildet; allerdings endet der zweite Durchgang 96 nach der Verbindung mit dem Kanal 98.

Der erste Durchgang 94 der Furchenöffnerventileinheit 88 ist eingangsseitig über eine erste Leitung 116 mit dem Steuerventil 86 und ausgangsseitig mit einer Kolbenkammer 118 des Stellmotors 90 verbunden.

Der zweite Durchgang 96 der Furchenöffnerventileinheit 88 ist eingangsseitig über eine zweite Leitung 120 mit dem Steuerventil 86 und ausgangsseitig mit einer Kolbenstangenkammer 122 des Stellmotors 90 verbunden.

Der erste Durchgang 94 der Reihenräumerventileinheit 92 ist eingangsseitig über die Leitung 116 mit dem Steuerventil 86 und ausgangsseitig mit einer Kolbenkammer 124 des Stellmotors 70 verbunden.

Der zweite Durchgang 96 der Reihenräumerventileinheit 92 ist eingangsseitig über die zweite Leitung 120 mit dem Steuerventil 86 und innerhalb der Reihenräumerventileinheit 92 mit dem Kanal 98 verbunden.

In der Verbindung des zweiten Durchgangs 96 der Furchenöffnerventileinheit 88 mit der Kolbenstangenkammer 122 des Stellmotors 90 ist ein wahlweise fernbedienbares Sperrventil 126 vorgesehen.

In der Verbindung des ersten Durchgangs 94 der Reihenräumerventileinheit 92 mit der Kolbenkammer 124 des Stellmotors 70 ist ein wahlweise fernbedienbares Sperrventil 128 vorgesehen.

Der Stellmotor 90 greift zwischen einem nicht gezeigten Rahmen des Sägeräts und dem Querträger 12 an und ist in der Lage, den Querträger 12 um seine Längsachse vertikal zu schwenken.

Nach alledem ergibt sich folgende Funktion.

Die Aufhängung 58 kann die Räumscheibe 56 zwischen einer angehobenen Stellung - sh. Figur 2 - und einer abgesenkten Stellung - sh. Figur 3 - verstellen.

Zum Absenken der Räumscheibe 56 muß der Stellmotor 70 in seine ausgefahrene Stellung gebracht werden. Hierzu wird mittels des Steuergeräts 86 der ersten Leitung 116 Druckmittel zugeführt, das dann auf dem Weg durch den ersten Durchgang 94 der Reihenräumerventileinheit 92 und das geöffnete Sperrventil 124 in die Kolbenkammer 124 des Stellmotors 70 gelangt und dessen Stellglied 76 gegen die Wirkung der Spannvorrichtung 68 ausfährt. Daraufhin nimmt das Parallelogramm seine gestreckte Lage ein und die Räumscheibe 56 stützt sich auf dem Boden ab. Je nach der vorgefundenen Unebenheit des Bodens wird nach dem Auftreffen der Räumscheibe 56 auf dem Boden und weiterer Druckmittelzufuhr der Kraftspeicher 72 zusammengedrückt, wobei sich der Bolzen 80 in dem Schlitz 82 bewegt. Der Auflagedruck der Räumscheibe 56 kann an dem Druckanzeigegerät 106 der Reihenräumerventileinheit 92 abgelesen und an der Feder 108 des dazugehörigen Druckbegrenzungsventils 100 eingestellt werden. Soll der Stellmotor 70 in dieser oder einer anderen Stellung verharren, wird das Sperrventil 128 geschlossen.

Das Absenken der Räumscheibe 56 bzw. der Aufhängung 58 kann je nachdem an welcher der Leitungen 116, 120 Druck bzw. kein Druck ansteht auf folgende Weisen geschehen.

Wenn die erste Leitung 116 unter Druck steht, wird das Druckbegrenzungsventil 100 der Reihenräumerventileinheit 92 fernbetätigt z. B. mittels eines Magnetventils in eine Stellung gebracht, in der eine Verbindung der Kolbenkammer 124 über den ersten Durchgang 94, das Druckbegrenzungsventil 100 und das Rückschlagventil 110 zu der zweiten Leitung 120 und schließlich zu einem drucklosen nicht gezeigten Vorratsbehälter erfolgt. In dieser Situation wird die zuvor gespannte Spannvorrichtung 68 das Stellglied 76 in das Gehäuse 74 hineinziehen und dabei die Räumscheibe 56 anheben.

Ist die erste Leitung 116 drucklos und wirkt bei geöffnetem Sperrventil 128 die Spannvorrichtung 68, kann die in der Kolbenkammer 124 des Stellmotors 70 vorhandene Flüssigkeit auf dem Weg über das Rückschlagventil 104, durch die erste Leitung 116 und das Steuerventil 86 in den Vorratsbehälter abfließen.

Selbst wenn bei druckloser erster Leitung 116 die zweite Leitung 120 unter Druck steht, funktioniert der zuvor beschriebene Druckmittelabfluß. In dieser Situation wird das Steuergerät 86 der zweiten Leitung 120 Druckmittel zuführen, das in die Kolbenstangenkammer 122 des Stellmotors 90 gelangt und das Stellmittel 76 einfährt. Aufgrund des Rückschlagventils 110 in der Reihenräumerventileinheit 92 kann das Druckmittel aber nicht zu der Kolbenkammer 124 gelangen.

Zwar wäre es grundsätzlich möglich, den Hydraulikkreis so zu steuern oder anzupassen, daß beide Stellmotoren 70, 90 unabhängig voneinander ein- bzw. ausgefahren werden können; das vorliegende Ausführungsbeispiel sieht jedoch vor, daß der Stellmotor 70 immer dann eingefahren wird, wenn auch der Stellmotor 90 eingefahren wird. Auf diese Weise wird vermieden, daß sich die Räumscheiben 56 in einer abgesenkten Stellung befinden, obwohl die Furchenöffner 20 ihre angehobene Stellung einnehmen.

Unabhängig davon, daß das Parallelogramm jede Bewegung der Konsole 40 mitvollzieht, da es an dieser angebracht ist, besteht auch eine Verknüpfung der beiden Stellmotoren 70, 90 derart, daß der Stellmotor 70 eingefahren wird, wenn auch der Stellmotor 90 eingefahren wird.

Soll der Stellmotor 70 in seiner eingefahrenen Stellung auch dann noch verharren, wenn der Stellmotor 90 wieder ausgefahren wird, dann ist hierzu das Sperrventil 128 zu schließen.

## Patentansprüche

1. Aufhängung (58) eines Reihenräumers (18) mit einem wenigstens zwei Lenker (60, 62) aufweisenden Parallelogrammgestänge und einer Spannvorrichtung 68 zwischen den beiden Lenkern (60, 62), **gekennzeichnet durch** einen Stellmotor (70), der parallel zu der Spannvorrichtung (68) an den Lenkern (60, 62) angreift.

2. Aufhängung nach Anspruch 1, **gekennzeichnet durch** einen Kraftspeicher (72) zwischen einem Lenker (62) und dem Stellmotor (70).

3. Aufhängung nach Anspruch 1 oder 2, **gekennzeichnet durch** eine Leerwegverbindung zwischen dem Stellmotor (70) oder dem Kraftspeicher (72) und einem der Lenker (62).

4. Aufhängung nach einem oder mehreren der vorherigen Ansprüche, **dadurch gekennzeichnet, daß** der Stellmotor (70) als einfachwirkender Druckmittelzylinder und die Spannvorrichtung (68) als eine diesem entgegengesetzt wirkende Feder ausgebildet ist.

5. Aufhängung nach einem oder mehreren der vorherigen Ansprüche, **dadurch gekennzeichnet, daß** die Spannvorrichtung (68) einerseits an einem Gehäuse (74) und andererseits an einem in dem Gehäuse (74) gleitend aufgenommenen Stellglied (76) angreift.

6. Aufhängung nach einem oder mehreren der vorherigen Ansprüche, **dadurch gekennzeichnet, daß** das Stellglied (76) mit einem Schlitz (82) versehen ist, in dem ein an einem Lenker (62) angebrachter Bolzen (82) geführt ist.

7. Aufhängung nach einem oder mehreren der vorherigen Ansprüche, **dadurch gekennzeichnet, daß** sich der Kraftspeicher (72) über wenigstens einen Teil des Schlitzes (80) erstreckt und einenends an dem Bolzen und anderenends an einem Anschlag (84) des Stellglieds (76) angreift.

8. Aufhängung nach einem oder mehreren der vorherigen Ansprüche, **dadurch gekennzeichnet, daß** eine Druckmittelzuoder -abfuhr zu oder aus dem Stellmotor (70) sperrbar ist.

9. Aufhängung nach einem oder mehreren der vorherigen Ansprüche, **dadurch gekennzeichnet, daß** der Stellmotor (70) in Abhängigkeit von der Stellung eines Furchenöffners (20) betätigbar ist.

10. Aufhängung nach einem oder mehreren der vorherigen Ansprüche, **dadurch gekennzeichnet, daß** ein an dem Stellmotor (70) anstehender Betriebsdruck einstellbar ist.

## Claims

1. A suspension (58) of a furrow cleaner (18) with a parallelogram linkage having at least two links (60, 62) and a tensioning device (68) between the two links (60, 62), **characterized by** a positioning motor (70) which engages the links (60, 62) in parallel with the tensioning device (68).

2. A suspension according to claim 1, **characterized by** an energy store (72) between one link and the positioning motor (70).

3. A suspension according to claim 1 or 2, **characterized by** a lost motion coupling between the positioning motor (70) or the energy store (72) and one of the links (62).

4. A suspension according to one or more of the preceding claims, **characterized in that** the positioning motor (70) is in the form of a single-acting pressure medium cylinder and the tensioning device (68) is formed as a spring acting in opposition thereto.

5. A suspension according to one or more of the preceding claims **characterized in that** the tensioning device (68) engages a housing (74) at one end and engages a positioning member (76) which is received slidably in the housing (74) at the other end.

6. A suspension according to one or more of the preceding claims, **characterized in that** the positioning member (76) is provided with a slot (82), in which a pin (82) fitted to one link (62) is guided.

7. A suspension according to one or more of the preceding claims, **characterized in that** the energy store (72) extends over at least part of the slot (80) and engages at one end on the pin and at the other end on a stop (84) of the positioning member (76).

8. A suspension according to one or more of the preceding claims, **characterized in that** a feed for pressure medium to or from the positioning motor (70) can be blocked.

9. A suspension according to one or more of the preceding claims, **characterized in that** the positioning motor (70) can be actuated in dependence on the position of a furrow opener (20).

10. A suspension according to one or more of the preceding claims, **characterized in that** an operating pressure acting on the positioning motor (70) can be adjusted.

## Revendications

1. Dispositif de suspension (58) d'un nettoyeur de sillons (18) comportant une tringlerie en forme de parallélogramme, qui possède deux bras articulés (60,62), et un dispositif de serrage (68) disposé entre les deux bras articulés (60,62), **caractérisé par** un servomoteur (70), qui attaque les bras articulés (60,62) parallèlement au dispositif de serrage (68).

2. Dispositif de suspension selon la revendication 1, **caractérisé par** un accumulateur d'énergie (72) disposé entre un bras articulé (62) et le servomoteur (70).

3. Dispositif de suspension selon la revendication 1 ou 2, **caractérisé par** une liaison avec course à vide entre le servomoteur (70) ou l'accumulateur d'énergie (72) et un des bras articulés (62).

4. Dispositif de suspension selon une ou plusieurs des revendications précédentes, **caractérisé en ce que** le servomoteur (70) est agencé sous la forme d'un vérin à simple effet utilisant un fluide sous pression, et le dispositif de serrage (68) est agencé sous la forme d'un ressort qui agit en sens opposé de ce vérin.

5. Dispositif de suspension selon une ou plusieurs des revendications précédentes, **caractérisé en ce que** le dispositif de serrage (68) attaque d'une part un carter (74) et d'autre part un organe de réglage (76), qui est logé de manière à pouvoir glisser dans le carter (74).

6. Dispositif de suspension selon une ou plusieurs des revendications précédentes, **caractérisé en ce que** l'organe de réglage (76) comporte une fente (80), dans laquelle est guidé un boulon (80), qui est monté sur un bras articulé (62).

7. Dispositif de suspension selon une ou plusieurs des revendications précédentes, **caractérisé en ce que** l'accumulateur d'énergie (72) s'étend sur au moins une partie de la fente (80) et attaque, par une extrémité, l'axe et par l'autre extrémité une butée (84) de l'organe de réglage (76).

8. Dispositif de suspension selon une ou plusieurs des revendications précédentes, **caractérisé en ce qu'**une amenée ou une évacuation du fluide sous pression au ou à partir du servomoteur (70) peut être bloquée.

9. Dispositif de suspension selon une ou plusieurs des revendications précédentes, **caractérisé en ce que** le servomoteur (70) peut être actionné en fonction de la position d'un ouvreur de sillons (20).

10. Dispositif de suspension selon une ou plusieurs des revendications précédentes, **caractérisé en ce qu'**une pression de fonctionnement présente au niveau du servomoteur (70) est réglable.
